# EUROPÄISCHE PATENTSCHRIFT

(11) **EP 2 862 254 B1**
(45) Veröffentlichungstag und Bekanntmachung des Hinweises auf die Patenterteilung: **18.05.2016**
(21) Anmeldenummer: 12761711.6
(22) Anmeldetag: 23.08.2012
(51) Int. Cl.: H02J 7/00, B60L 11/18, H01M 10/44

(54) **STROMAUSGABEEINHEIT FÜR EINE LADEEINRICHTUNG**
CURRENT OUTPUT UNIT FOR A CHARGING DEVICE
UNITÉ DE FOURNITURE DE COURANT POUR UN DISPOSITIF DE CHARGE

(43) Veröffentlichungstag der Anmeldung: 22.04.2015
(73) Patentinhaber: Siemens Aktiengesellschaft, 80333 München (DE)
(72) Erfinder: FOGANG TCHONLA, Etienne, 91058 Erlangen (DE)
(86) Internationale Anmeldenummer: PCT/EP2012/066407
(87) Internationale Veröffentlichungsnummer: WO 2014/029436

(56) Entgegenhaltungen:
- EP-A1- 1 213 189
- EP-A1- 2 439 551
- JP-A- 9 121 465

## Beschreibung

Die Erfindung betrifft eine Stromausgabeeinheit für eine Ladeeinrichtung zum elektrischen Laden einer Fahrbatterie eines elektrisch antreibbaren Fahrzeugs und ein Verfahren zum Ausgeben eines Stroms.

Elektrisch antreibbare Fahrzeuge weisen eine Fahrbatterie (Akkumulator) auf, welche die für den Fahrbetrieb benötigte elektrische Energie zur Verfügung stellt. Entladene Batterien müssen bei Bedarf mittels einer Ladeeinrichtung wieder aufgeladen werden. Für Fahrzeuge mit Fahrbatterien großer elektrischer Kapazität kann ein solcher Ladevorgang eine beträchtliche Zeit dauern.

Die JP 9-121465 A vgl.den Oberbegriff des Anspruchs 1 offenbart eine Ladeeinrichtung zum elektrischen Laden einer Batterie. Die Ladeeinrichtung offenbart drei Ladeeinheiten, die über ein jeweiliges Schaltelement steuerbar an einen Knotenpunkt geschaltet werden können, welcher mit einer Ladeschnittstelle zum Laden der Batterie verbindbar ist. Zu einem jeweiligen Zeitpunkt wird immer nur eines der steuerbaren Schaltelemente geschlossen, so dass die Ladeschnittstelle zum gegebenen Zeitpunkt mit genau einer Ladeeinheit verbunden ist.

Die EP 1 213 189 A1 offenbart eine Einrichtung zur Überwachung eines Bordnetzes eines Fahrzeugs, bei der zur Messung des in einer Anschlussleitung zu einer Batterie fließenden Stroms mindestens zwei Sensoren in der Anschlussleitung vorgesehen sind, deren Messbereiche voneinander verschieden sind.

Der Erfindung liegt die Aufgabe zugrunde, eine Einheit und ein Verfahren anzugeben, mit denen der Ladevorgang von elektrisch antreibbaren Fahrzeugen verkürzt werden kann.

Diese Aufgabe wird erfindungsgemäß gelöst durch eine Einheit und ein Verfahren nach den unabhängigen Patentansprüchen. Vorteilhafte Ausgestaltungen der Einheit und des Verfahrens sind in den abhängigen Patentansprüchen angegeben.

Erfindungsgemäß angegeben wird eine Stromausgabeeinheit für eine Ladeeinrichtung zum elektrischen Laden einer Fahrbatterie eines elektrisch antreibbaren Fahrzeugs mit einer ersten Schnittstelle zum elektrischen Verbinden mit einer ersten Ladeeinheit, welche im Betrieb einen ersten Strom (mit einer ersten Maximalstromstärke) über die erste Schnittstelle an die Stromausgabeeinheit liefert, einer zweiten Schnittstelle zum elektrischen Verbinden mit einer zweiten Ladeeinheit, welche im Betrieb einen zweiten Strom (mit einer zweiten Maximalstromstärke) über die zweite Schnittstelle an die Stromausgabeeinheit liefert, einer Summiereinheit, und einer Ladeschnittstelle zur Ausgabe des Gesamtstroms zum Laden der Fahrbatterie. Die Summiereinheit summiert erfindungsgemäß (mindestens) den ersten Strom und den zweiten Strom unter Bildung eines Gesamtstroms. Bei dieser Stromausgabeeinheit ist besonders vorteilhaft, dass diese mittels der Summiereinheit mindestens den ersten von der ersten Ladeeinheit stammenden Strom und den zweiten von der zweiten Ladeeinheit stammenden Strom unter Bildung des Gesamtstroms summiert und diesen Gesamtstrom an der Ladeschnittstelle ausgibt.

Der Gesamtstrom ist also größer als der erste Strom und auch größer als der zweite Strom und erlaubt es, das Fahrzeug in einer kürzeren Zeit zu laden als dies mit nur dem ersten Strom oder mit nur dem zweiten Strom möglich wäre. Darüber hinaus werden zur Erzeugung des hohen Gesamtstroms nur Ladeeinheiten benötigt, welche jede für sich lediglich einen vergleichsweise kleinen ersten Strom bzw. einen vergleichsweise kleinen zweiten Strom zu liefern imstande sein müssen. Derartige Ladeeinheiten, welche Ströme mit relativ geringen Maximalstromstärken liefern, können in hoher Stückzahl und damit preisgünstig hergestellt werden. Durch Zusammenschaltung zwei oder mehr derartiger Ladeeinheiten mittels der Stromausgabeeinheit können sehr hohe Gesamtströme erzeugt werden. Auch Fahrbatterien hoher elektrischer Kapazität können mit diesem Gesamtstrom in kurzer Zeit aufgeladen werden.

Die Stromausgabeeinheit kann einen ersten Stromsensor zum Messen des ersten Stroms und/oder einen zweiten Stromsensor zum Messen des zweiten Stroms aufweisen. Mittels dieser Stromsensoren kann die Stromausgabeeinheit die Höhe des von der ersten Ladeeinheit empfangenen ersten Stroms und/oder die Höhe des von der zweiten Ladeeinheit empfangenen zweiten Stroms überwachen.

Die Stromausgabeeinheit kann weiterhin eine Steuereinrichtung aufweisen, die zum Ausgeben eines ersten Stromsollwerts an die erste Ladeeinheit und/oder zum Ausgeben eines zweiten Stromsollwerts an die zweite Ladeeinheit ausgebildet ist. Mit einem derartigen ersten Stromsollwert kann die erste Ladeeinheit angewiesen werden, den ersten Strom mit einer dem Stromsollwert entsprechenden Stromstärke an die Stromausgabeeinheit zu liefern. Ebenso kann mit dem zweiten Stromsollwert die zweite Ladeeinheit angewiesen werden, den zweiten Strom mit einer dem zweiten Stromsollwert entsprechenden Stromstärke an die Stromausgabeeinheit zu liefern.

Die Stromausgabeeinheit kann ausgebildet sein zum Empfangen einer von dem Fahrzeug stammenden Stromanforderungsinformation. Mittels dieser Stromanforderungsinformation wird die Steuereinrichtung darüber informiert, wie groß der Gesamtstrom ist, den das Fahrzeug zum Laden der Fahrbatterie anfordert.

Die Stromausgabeeinheit kann auch ausgebildet sein zum Ermitteln des ersten Stromsollwerts und/oder des zweiten Stromsollwerts anhand der Stromanforderungsinformation. Die derart ermittelten Stromsollwerte werden so ermittelt, dass die Stromstärke des Gesamtstroms der Stromanforderungsinformation entspricht.

Die Stromausgabeeinheit kann auch mindestens eine weitere Schnittstelle zum elektrischen Verbinden mit einer weiteren Ladeeinheit aufweisen. Die Stromausgabeeinheit kann somit mindestens die erste Schnittstelle und die zweite Schnittstelle zum elektrischen Verbinden mit jeweils einer Ladeeinheit aufweisen.

Die Stromausgabeeinheit kann auch so ausgestaltet sein, dass der erste Strom, der zweite Strom und der Gesamtstrom jeweils ein Gleichstrom ist. Eine derartige Stromausgabeeinheit ist zum sogenannten Gleichstromladen von elektrisch antreibbaren Fahrzeugen geeignet.

Erfindungsgemäß angegeben wird auch eine Ladeeinrichtung zum elektrischen Laden einer Fahrbatterie eines elektrisch antreibbaren Fahrzeugs mit einer der vorstehend beschriebenen Stromausgabeeinheiten.

Erfindungsgemäß angegeben wird weiterhin ein Verfahren zum Ausgeben eines Stroms zum elektrischen Laden einer Fahrbatterie eines elektrisch antreibbaren Fahrzeugs, wobei bei dem Verfahren an einer ersten Schnittstelle einer Stromausgabeeinheit ein erster elektrischer Strom eintrifft, der von einer ersten Ladeeinheit stammt, an einer zweiten Schnittstelle der Stromausgabeeinheit ein zweiter elektrischer Strom eintrifft, der von einer zweiten Ladeeinheit stammt, von einer Summiereinheit (mindestens) der erste Strom und der zweite Strom unter Bildung eines Gesamtstroms summiert werden, und der Gesamtstrom an einer Ladeschnittstelle für ein elektrisch antreibbbares Fahrzeug ausgegeben wird. Mit anderen Worten wird an der ersten Schnittstelle der Stromausgabeeinheit der erste elektrische Strom empfangen, der von der ersten Ladeeinheit stammt und an der zweiten Schnittstelle der Stromausgabeeinheit wird der zweite elektrische Strom empfangen, der von der zweiten Ladeeinheit stammt.

Dieses Verfahren kann so ausgestaltet sein, dass von einer Steuereinrichtung der Stromausgabeeinheit ein erster Stromsollwert an die erste Ladeeinheit und/oder ein zweiter Stromsollwert an die zweite Ladeeinheit ausgegeben wird.

Das Verfahren kann auch so ausgestaltet sein, dass von der Steuereinrichtung eine von dem Fahrzeug stammende Stromanforderungsinformation empfangen wird.

Das Verfahren kann so ablaufen, dass von der Steuereinrichtung anhand der Stromanforderungsinformation der erste Stromsollwert und/oder der zweite Stromsollwert ermittelt wird.

Das Verfahren kann auch so ablaufen, dass an mindestens einer weiteren Schnittstelle der Stromausgabeeinheit ein weiterer elektrischer Strom eintrifft (empfangen wird), der von einer weiteren Ladeeinheit stammt.

Das Verfahren kann so ausgebildet sein, dass der erste Strom, der zweite Strom und der Gesamtstrom jeweils ein Gleichstrom ist.

Das Verfahren weist ebenfalls die Vorteile auf, die oben im Zusammenhang mit der Stromausgabeeinheit angegeben sind.

Im Folgenden wird die Erfindung anhand eines Ausführungsbeispiels näher erläutert. Dazu ist in der einzigen
- Figur: ein Ausführungsbeispiel einer Stromausgabeeinheit und eines Verfahrens zum Ausgeben eines Stroms
dargestellt.

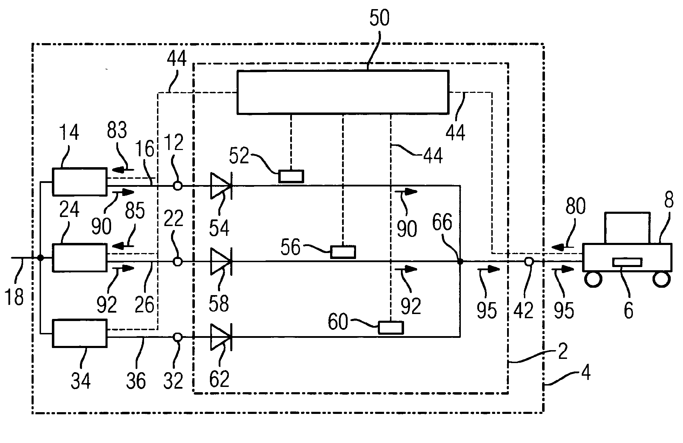

In der Figur ist eine Stromausgabeeinheit 2 dargestellt, welche Teil einer Ladeeinrichtung 4 zum elektrischen Laden einer Fahrbatterie 6 eines elektrisch antreibbaren Fahrzeugs 8 ist. Die Stromausgabeeinheit 2 weist eine erste Schnittstelle 12 zum elektrischen Verbinden mit einer ersten Ladeeinheit 14 auf. Die erste Ladeeinheit 14 ist in der Lage, einen ersten elektrischen Strom mit einer ersten Maximalstromstärke Iₘₐₓ1 über eine erste elektrische Verbindung 16 und über die erste Schnittstelle 12 an die Stromausgabeeinheit 2 zu liefern. Die erste Ladeeinheit 14 ist mittels eines elektrischen Kabels 18 mit einem nicht dargestellten Energieversorgungsnetz verbunden und bezieht elektrische Energie von diesem Energieversorgungsnetz.

Ebenso weist die Stromausgabeeinheit 2 eine zweite Schnittstelle 22 zum elektrischen Verbinden mit einer zweiten Ladeeinheit 24 auf. Die zweite Ladeeinheit 24 ist in der Lage, einen zweiten elektrischen Strom mit einer zweiten Maximalstromstärke Iₘₐₓ2 über eine zweite elektrische Verbindung 26 und über die zweite Schnittstelle 22 an die Stromausgabeeinheit 2 zu liefern. Die zweite Ladeeinheit 24 ist mittels des elektrischen Kabels 18 mit dem nicht dargestellten Energieversorgungsnetz verbunden und bezieht elektrische Energie von diesem Energieversorgungsnetz.

Weiterhin weist die Stromausgabeeinheit 2 eine dritte Schnittstelle 32 zum elektrischen Verbinden mit einer dritten Ladeeinheit 34 auf. Die dritte Ladeeinheit 34 ist in der Lage, einen dritten elektrischen Strom mit einer dritten Maximalstromstärke Iₘₐₓ3 über eine dritte elektrische Verbindung 36 und über die dritte Schnittstelle 32 an die Stromausgabeeinheit 2 zu liefern. Die dritte Ladeeinheit 34 ist mittels des elektrischen Kabels 18 mit dem Energieversorgungsnetz verbunden und bezieht elektrische Energie von diesem Energieversorgungsnetz. An die Stromausgabeeinheit 2 können optional mittels weiterer Schnittstellen auch noch weitere Ladeeinheiten angeschlossen werden.

Weiterhin weist die Stromausgabeeinheit 2 eine Ladeschnittstelle 42 auf, mittels der die Stromausgabeeinheit 2 mit dem elektrisch antreibbaren Fahrzeug 8 elektrisch verbunden ist.

Die Stromausgabeeinheit 2 ist mittels Kommunikationsverbindungen 44, welche als strichlierte Linien dargestellt sind, sowohl mit dem elektrisch antreibbaren Fahrzeug 8 als auch mit den Ladeeinheiten 14, 24 und 34 verbunden und kann Informationen mit dem Fahrzeug und mit den Ladeeinheiten austauschen. Die Stromausgabeeinheit 2, die erste Ladeeinheit 14, die zweite Ladeeinheit 24 und die dritte Ladeeinheit 34 sind Einheiten der Ladeeinrichtung 4.

Die Stromausgabeeinheit 2 weist eine Steuereinrichtung 50, einen ersten Stromsensor 52, eine erste Leistungsdiode 54, einen zweiten Stromsensor 56, eine zweite Leistungsdiode 58, einen dritten Stromsensor 60, eine dritte Leistungsdiode 62, sowie eine Summiereinheit 66 auf. Die Steuereinrichtung 50 kann beispielsweise als ein digitaler Signalprozessor ausgestaltet sein; die Stromsensoren können als Stromwandler ausgestaltet sein.

Mit der ersten Ladeeinheit 14 könnte die Fahrbatterie 6 auch ohne Zwischenschaltung der Stromausgabeeinheit 2 aufgeladen werden. Dieses Aufladen könnte allerdings nur mit dem ersten Strom mit der ersten Maximalstromstärke Iₘₐₓ1 erfolgen, dadurch würde der Ladevorgang vergleichsweise lange dauern. Dies gilt in gleicher Weise auch für die zweite Ladeeinheit 24 und die dritte Ladeeinheit 34.

Im Folgenden wird die Funktion der Ladeeinrichtung sowie der Ablauf des Verfahrens zum Ausgeben eines Stroms für ein elektrisch antreibbares Fahrzeug beispielhaft erläutert.

Das elektrisch antreibbare Fahrzeug 8 sendet über die Kommunikationsverbindung 44 eine Stromanforderungsinformation 80 an die Steuereinrichtung 50. Die Steuereinrichtung 50 empfängt diese von dem Fahrzeug 8 stammende Stromanforderungsinformation 80 und wertet diese aus. Im Ausführungsbeispiel hat diese Stromanforderungsinformation 80 den Inhalt, dass das Fahrzeug 8 einen Ladestrom mit der Stromstärke 45 A anfordert, um die Fahrbatterie 6 aufzuladen. Die erste Ladeeinheit 14, die zweite Ladeeinheit 24 und die dritte Ladeeinheit 34 können aber jeweils nur einen Strom mit einer Maximalstromstärke von 30 A an die Stromausgabeeinheit 2 liefern (Iₘₐₓ1 = Iₘₐₓ2 = Iₘₐₓ3 = 30 A). Daraufhin ermittelt die Steuereinrichtung 50 aus der Stromanforderungsinformation 80 einen ersten Stromsollwert für die erste Ladeeinheit und einen zweiten Stromsollwert für die zweite Ladeeinheit. Dabei teilt die Steuereinrichtung 50 die mittels der Stromanforderungsinformation 80 angeforderte Stromstärke von 45 A auf die beiden Stromsollwerte auf. Vorzugsweise ermittelt die Steuereinrichtung dabei die Stromsollwerte derart, dass eine der Ladeeinheiten einen Strom mit der Maximalstromstärke liefert und eine andere der Ladeeinheiten einen weiteren Strom liefert, so dass insgesamt der Strom gemäß der Stromanforderungsinformation für das Fahrzeug bereitgestellt werden kann. Dabei ist vorteilhaft, dass die Ladeeinheit, die den Strom mit der Maximalstromstärke liefert, mit einem günstigen Arbeitspunkt und damit mit einem guten Wirkungsgrad arbeitet.

Im Ausführungsbeispiel ermittelt die Steuereinrichtung den ersten Stromsollwert derart, dass der erste Stromsollwert 30 A beträgt und der zweite Stromsollwert 15 A beträgt. Daraufhin sendet die Steuereinrichtung über die Kommunikationsverbindung 44 den ersten Stromsollwert 83 an die erste Ladeeinheit 14 und den zweiten Stromsollwert 85 an die zweite Ladeeinheit 24. Mittels des ersten Stromsollwerts 83 wird die erste Ladeeinheit 14 angewiesen, einen ersten Strom 90 mit der Stromstärke 30 A an die erste Schnittstelle 12 der Stromausgabeeinheit zu liefern. Die dritte Ladeeinheit 34 bleibt in einem Standby-Modus und liefert keinen Strom zu der Stromausgabeeinheit 2. Deshalb treten nur minimale Verluste in der dritten Ladeeinheit auf; der Gesamtwirkungsgrad der Ladeeinrichtung wird dadurch erhöht. An der ersten Schnittstelle 12 trifft daraufhin der erste Strom 90 ein. Die erste Schnittstelle 12 empfängt den ersten Strom 90 und leitet diesen ersten Strom über die erste Leistungsdiode 54 zu der Summiereinheit 66 weiter.

Mittels des zweiten Stromsollwerts 85 wird die zweite Ladeeinheit 24 angewiesen, einen zweiten Strom 92 an die zweite Schnittstelle 22 zu liefern, wobei der zweite Strom die Stromstärke 15 A aufweist. An der zweiten Schnittstelle 22 trifft daraufhin der zweite Strom 92 ein. Die zweite Schnittstelle 22 empfängt den zweiten Strom 92 und leitet diesen zweiten Strom über die zweite Leistungsdiode 58 an die Summiereinheit 66 weiter.

Die Summiereinheit 66 summiert (addiert) den ersten Strom 90 und den zweiten Strom 92, es entsteht dabei ein Gesamtstrom 95. Die Summiereinheit 66 ist im einfachsten Fall eine elektrische Verbindung der Stromleitungen, die den ersten Strom von der ersten Ladeeinheit und den zweiten Strom von der zweiten Ladeeinheit (und ggf. noch weiterer Ströme von weiteren Ladeeinheiten) führen. Die Summiereinheit kann aber auch mittels leistungselektronischer Bauelemente realisiert sein.Durch die Summiereinheit 66 werden der erste Strom 90 und der zweite Strom 92 zu dem Gesamtstrom 95 addiert.

Der Gesamtstrom 95 wird über die Ladeschnittstelle 42 an das Fahrzeug 8 ausgegeben. Dabei überwacht die Steuereinrichtung mittels des ersten Stromsensors 52 die Höhe des ersten Stroms 90 und mittels des zweiten Stromsensors 56 die Höhe des zweiten Stroms 92. Wenn der erste Strom 90 von dem ersten Stromsollwert 83 abweicht oder wenn der zweite Strom 92 von dem zweiten Stromsollwert 85 abweicht, dann sendet die Steuereinrichtung 50 ein Signal an die erste Ladeeinheit bzw. an die zweite Ladeeinheit, woraufhin die jeweilige Ladeeinheit den Strom korrigiert. Wenn innerhalb einer vorgegebenen Zeitspanne der Strom nicht dem Sollwert entspricht, dann wird die jeweilige Ladeeinheit abgeschaltet.

Im Ausführungsbeispiel ist der erste Strom 90, der zweite Strom 92 sowie der Gesamtstrom 95 jeweils ein Gleichstrom. Bei der Ladeschnittstelle 42 handelt es sich also um eine Gleichspannungs-Ladeschnittstelle für elektrisch antreibbare Fahrzeuge 8. Die Ladeeinrichtung 4 stellt also eine Gleichstrom-Ladeeinrichtung dar, welche zum Gleichstrom-Laden des Fahrzeugs 8 dient. In einem anderen Ausführungsbeispiel können die Ströme aber auch Wechselströme sein.

Es wurde eine Stromausgabeeinheit, eine Ladeeinrichtung sowie ein Verfahren beschrieben, mit denen insbesondere Fahrbatterien hoher elektrischer Kapazität in kurzer Zeit aufgeladen werden können. Derartige Fahrbatterien hoher elektrischer Kapazität können beispielsweise in Fahrzeugen mit großen elektrischen Leistungen, wie z. B. in Großraumlimousinen, SUVs (sports utility vehicles), Bussen oder Lastkraftwagen eingesetzt sein.

Dabei können vorteilhafterweise Ladeeinheiten verwendet werden, welche jeweils Ströme mit einer nur relativ geringen Maximalstromstärke liefern können. Derartige Ladeeinheiten können als kleine elektrische Leistungen aufweisende Standard-Ladeeinheiten in großen Stückzahlen und damit kostengünstig produziert werden. Durch die Stromausgabeeinheit wird aus den von den Ladeeinheiten gelieferten Strömen ein Gesamtstrom höherer Stromstärke erzeugt, mit dem die Fahrbatterie schnell aufgeladen werden kann.

## Patentansprüche

1. Stromausgabeeinheit (2) für eine Ladeeinrichtung (4) zum elektrischen Laden einer Fahrbatterie (6) eines elektrisch antreibbaren Fahrzeugs (8) mit
- einer ersten Schnittstelle (12) zum elektrischen Verbinden mit einer ersten Ladeeinheit (14), welche im Betrieb einen ersten Strom (90) über die erste Schnittstelle (12) an die Stromausgabeeinheit (2) liefert,
- einer zweiten Schnittstelle (22) zum elektrischen Verbinden mit einer zweiten Ladeeinheit (24), welche im Betrieb einen zweiten Strom (92) über die zweite Schnittstelle (22) an die Stromausgabeeinheit (2) liefert,
- einer Summiereinheit (66), und
- einer Ladeschnittstelle (42) zur Ausgabe des Gesamtstroms (95) zum Laden der Fahrbatterie (6),
**dadurch gekennzeichnet, dass** die Summiereinheit (66) im Betrieb den ersten Strom (90) und den zweiten Strom (92) unter Bildung eines Gesamtstroms (95) summiert.

2. Stromausgabeeinheit nach Anspruch 1,
**gekennzeichnet durch**
- einen ersten Stromsensor (52) zum Messen des ersten Stroms (90) und/oder einen zweiten Stromsensor (56) zum Messen des zweiten Stroms (92).

3. Stromausgabeeinheit nach Anspruch 1 oder 2,
**gekennzeichnet durch**
- eine Steuereinrichtung (50), die zum Ausgeben eines ersten Stromsollwerts (83) an die erste Ladeeinheit (14) und/oder eines zweiten Stromsollwerts (85) an die zweite Ladeeinheit (24) ausgebildet ist.

4. Stromausgabeeinheit nach Anspruch 3,
**dadurch gekennzeichnet, dass**
- die Steuereinrichtung (50) ausgebildet ist zum Empfangen einer von dem Fahrzeug stammenden Stromanforderungsinformation (80).

5. Stromausgabeeinheit nach Anspruch 4,
**dadurch gekennzeichnet, dass**
- die Steuereinrichtung (50) ausgebildet ist zum Ermitteln des ersten Stromsollwerts (83) und/oder des zweiten Stromsollwerts (85) anhand der Stromanforderungsinformation (80).

6. Stromausgabeeinheit nach einem der vorhergehenden Ansprüche,
**gekennzeichnet durch**
- mindestens eine weitere Schnittstelle (32) zum elektrischen Verbinden mit einer weiteren Ladeeinheit (34).

7. Stromausgabeeinheit nach einem der vorhergehenden Ansprüche,
**dadurch gekennzeichnet, dass**
- der erste Strom (90), der zweite Strom (92) und der Gesamtstrom (95) jeweils ein Gleichstrom ist.

8. Ladeeinrichtung (4) zum elektrischen Laden einer Fahrbatterie (6) eines elektrisch antreibbaren Fahrzeugs (8) mit einer Stromausgabeeinheit (2) nach einem der vorhergehenden Ansprüche.

9. Verfahren zum Ausgeben eines Stroms (95) zum elektrischen Laden einer Fahrbatterie (6) eines elektrisch antreibbaren Fahrzeugs (8), wobei bei dem Verfahren
- an einer ersten Schnittstelle (12) einer Stromausgabeeinheit (2) ein erster elektrischer Strom (90) eintrifft, der von einer ersten Ladeeinheit (14) stammt,
- an einer zweiten Schnittstelle (22) der Stromausgabeeinheit (2) ein zweiter elektrischer Strom (92) eintrifft, der von einer zweiten Ladeeinheit (24) stammt,
- von einer Summiereinheit (66) der erste Strom (90) und der zweite Strom (92) unter Bildung eines Gesamtstroms (95) summiert werden, und
- der Gesamtstrom (95) an einer Ladeschnittstelle (42) für ein elektrisch antreibbares Fahrzeug (8) ausgegeben wird.

10. Verfahren nach Anspruch 9,
**dadurch gekennzeichnet, dass**
- von einer Steuereinrichtung (50) der Stromausgabeeinheit (2) ein erster Stromsollwert (83) an die erste Ladeeinheit (14) und/oder ein zweiter Stromsollwert (85) an die zweite Ladeeinheit (24) ausgegeben wird.

11. Verfahren nach Anspruch 9 oder 10,
**dadurch gekennzeichnet, dass**
- von der Steuereinrichtung (50) eine von dem Fahrzeug (8) stammende Stromanforderungsinformation (80) empfangen wird.

12. Verfahren nach Anspruch 11,
**dadurch gekennzeichnet, dass**
- von der Steuereinrichtung (50) anhand der Stromanforderungsinformation (80) der erste Stromsollwert (83) und/oder der zweite Stromsollwert (85) ermittelt wird.

13. Verfahren nach einem der Ansprüche 9 bis 12,
**dadurch gekennzeichnet, dass**
- an mindestens einer weiteren Schnittstelle (32) der Stromausgabeeinheit (2) ein weiterer elektrischer Strom eintrifft, der von einer weiteren Ladeeinheit (34) stammt.

14. Verfahren nach einem der Ansprüche 9 bis 13,
**dadurch gekennzeichnet, dass**
- der erste Strom (90), der zweite Strom (92) und der Gesamtstrom (95) jeweils ein Gleichstrom ist

## Claims

1. Current output unit (2) for a charging device (4) for electrically charging a traction battery (6) of an electrically driveable vehicle (8), having
- a first interface (12) for electrically connecting to a first charging unit (14) which during operation supplies a first current (90) to the current output unit (2) via the first interface (12),
- a second interface (22) for electrically connecting to a second charging unit (24) which during operation supplies a second current (92) to the current output unit (2) via the second interface (22),
- a summing unit (66), and
- a charging interface (42) for outputting the total current (95) for charging the traction battery (6),
**characterized in that**
during operation the summing unit (66) sums the first current (90) and the second current (92) to form a total current (95).

2. Current output unit according to Claim 1,
**characterized by**
- a first current sensor (52) for measuring the first current (90) and/or a second current sensor (56) for measuring the second current (92).

3. Current output unit according to Claim 1 or 2, **characterized by**
- a control device (50) which is designed to output a first current setpoint value (83) to the first charging unit (14) and/or a second current setpoint value (85) to the second charging unit (24).

4. Current output unit according to Claim 3,
**characterized in that**
- the control device (50) is designed to receive a current request information item (80) which originates from the vehicle.

5. Current output unit according to Claim 4,
**characterized in that**
- the control device (50) is designed to determine the first current setpoint value (83) and/or the second current setpoint value (85) on the basis of the current request information item (80).

6. Current output unit according to one of the preceding claims,
**characterized by**
- at least one further interface (32) for electrically connecting to a further charging unit (34).

7. Current output unit according to one of the preceding claims,
**characterized in that**
- the first current (90), the second current (92) and the total current (95) are each a direct current.

8. Charging device (4) for electrically charging a traction battery (6) of an electrically driveable vehicle (8) with a current output unit (2) according to one of the preceding claims.

9. Method for outputting a current (95) for electrically charging a traction battery (6) of an electrically driveable vehicle (8), wherein in the method
- a first electrical current (90) which originates from a first charging unit (14) arrives at a first interface (12) of a current output unit (2),
- a second electrical current (92) which originates from a second charging unit (24) arrives at a second interface (22) of the current output unit (2),
- the first current (90) and the second current (92) are summed by a summing unit (66) to form a total current (95), and
- the total current (95) is output at a charging interface (42) for an electrically driveable vehicle (8).

10. Method according to Claim 9,
**characterized in that**
- a control device (50) of the current output unit (2) outputs a first current setpoint value (83) to the first charging unit (14) and/or a second current setpoint value (85) to the second charging unit (24).

11. Method according to Claim 9 or 10,
**characterized in that**
- the control device (50) receives a current request information item (80) which originates from the vehicle (8).

12. Method according to Claim 11,
**characterized in that**
- the control device (50) determines the first current setpoint value (83) and/or the second current setpoint value (85) on the basis of the current request information item (80).

13. Method according to one of Claims 9 to 12,
**characterized in that**
- a further electrical current which originates from a further charging unit (34) arrives at least one further interface (32) of the current output unit (2).

14. Method according to one of Claims 9 to 13,
**characterized in that**
- the first current (90), the second current (92) and the total current (95) are each a direct current.

## Revendications

1. Unité de fourniture de courant (2) pour un dispositif de charge (4) servant à la charge électrique d'une batterie de traction (6) d'un véhicule à entraînement électrique (8), comprenant
- une première interface (12) pour le raccordement électrique à une première unité de charge (14) délivrant en fonctionnement un premier courant (90) à l'unité de fourniture de courant (2) par l'intermédiaire de la première interface (12),
- une deuxième interface (22) pour le raccordement électrique à une deuxième unité de charge (24) délivrant en fonctionnement un deuxième courant (92) à l'unité de fourniture de courant (2) par l'intermédiaire de la deuxième interface (22),
- une unité d'addition (66), et
- une interface de charge (42) pour la fourniture du courant total (95) pour la charge de la batterie de traction (6), **caractérisée en ce que**
l'unité d'addition (66) additionne en fonctionnement le premier courant (90) et le deuxième courant (92) en formant un courant total (95).

2. Unité de fourniture de courant selon la revendication 1, **caractérisée par**
- un premier capteur de courant (52) servant à mesurer le premier courant (90) et/ou un deuxième capteur de courant (56) servant à mesurer le deuxième courant (92).

3. Unité de fourniture de courant selon la revendication 1 ou 2,
**caractérisée par**
- un dispositif de commande (50), conçu pour fournir une première valeur de consigne de courant (83) à la première unité de charge (14) et/ou une deuxième valeur de consigne de courant (85) à la deuxième unité de charge (24).

4. Unité de fourniture de courant selon la revendication 3,
**caractérisée en ce que**
- le dispositif de commande (50) est conçu pour recevoir une information de demande de courant (80) provenant du véhicule.

5. Unité de fourniture de courant selon la revendication 4,
**caractérisée en ce que**
- le dispositif de commande (50) est conçu pour déterminer la première valeur de consigne de courant (83) et/ou la deuxième valeur de consigne de courant (85) à l'aide de ladite information de demande de courant (80).

6. Unité de fourniture de courant selon l'une des revendications précédentes,
**caractérisée par**
- au moins une autre interface (32) pour le raccordement électrique à une autre unité de charge (34).

7. Unité de fourniture de courant selon l'une des revendications précédentes,
**caractérisée en ce que**
- le premier courant (90), le deuxième courant (92) et le courant total (95) est à chaque fois un courant continu.

8. Dispositif de charge (4) pour la charge électrique d'une batterie de traction (6) d'un véhicule à entraînement électrique (8) comprenant une unité de fourniture de courant (2) selon l'une des revendications précédentes.

9. Procédé de fourniture d'un courant (95) pour la charge électrique d'une batterie de traction (6) d'un véhicule à entraînement électrique (8), procédé dans lequel
- un premier courant électrique (90) provenant d'une première unité de charge (14) arrive à une première interface (12) d'une unité de fourniture de courant (2),
- un deuxième courant électrique (92) provenant d'une deuxième unité de charge (24) arrive à une deuxième interface (22) de l'unité de fourniture de courant (2),
- le premier courant (90) et le deuxième courant (92) sont additionnés par une unité d'addition (66) en formant un courant total (95), et
- le courant total (95) est fourni à une interface de charge (42) pour un véhicule à entraînement électrique (8).

10. Procédé selon la revendication 9,
**caractérisé en ce que**
- un dispositif de commande (50) de l'unité de fourniture de courant (2) fournit une première valeur de consigne de courant (83) à la première unité de charge (14) et/ou une deuxième valeur de consigne de courant (85) à la deuxième unité de charge (24).

11. Procédé selon la revendication 9 ou 10,
**caractérisé en ce que**
- le dispositif de commande (50) reçoit une information de demande de courant (80) provenant du véhicule (8).

12. Procédé selon la revendication 11,
**caractérisé en ce que**
- le dispositif de commande (50) détermine la première valeur de consigne de courant (83) et/ou la deuxième valeur de consigne de courant (85) à l'aide de ladite information de demande de courant (80).

13. Procédé selon l'une des revendications 9 à 12,
**caractérisé en ce que**
- un autre courant électrique provenant d'une autre unité de charge (34) arrive à au moins une autre interface (32) de l'unité de fourniture de courant (2).

14. Procédé selon l'une des revendications 9 à 13,
**caractérisé en ce que**
- le premier courant (90), le deuxième courant (92) et le courant total (95) est à chaque fois un courant continu.
